# EUROPEAN PATENT SPECIFICATION

(11) **EP 4 068 872 B1**
(45) Date of publication and mention of the grant of the patent: **10.09.2025**
(21) Application number: 22163410.8
(22) Date of filing: 22.03.2022
(51) Int. Cl.: H04W 68/02, H04W 72/04

(54) **SIGNALING OF BEAM-SPECIFIC PAGING EARLY INDICATION**
SIGNALISIERUNG EINER STRAHLSPEZIFISCHEN FUNKRUFFRÜHINDIKATION
SIGNALISATION D'INDICATION PRÉCOCE DE RADIOMESSAGERIE SPÉCIFIQUE AU FAISCEAU

(30) Priority: 01.04.2021 FI 20215406
(43) Date of publication of application: 05.10.2022
(73) Proprietor: Nokia Technologies Oy, 02610 Espoo (FI)
(72) Inventor: KAIKKONEN, Jorma Johannes, 90800 Oulu (FI); LAURIDSEN, Mads, 9260 Gistrup (DK); LASELVA, Daniela, 9270 Klarup (DK); KOSKELA, Timo, 90670 Oulu (FI)
(74) Representative: Nokia EPO representatives

(56) References cited:
- WO-A1-2019/241559
- US-A1- 2019 387 572
- US-A1- 2020 288 399
- HUAWEI ET AL: "Assistance RS occasions for IDLE/inactive mode", vol. RAN WG1, no. E-meeting; 20210125 - 20210205, 19 January 2021 (2021-01-19), XP051970849, Retrieved from the Internet <URL:https://ftp.3gpp.org/tsg_ran/WG1_RL1/TSGR1_104-e/Docs/R1-2100217.zip R1-2100217.docx> [retrieved on 20210119]

## Description

### Field of the invention

The present disclosure relates to Paging Early Indication.

### Abbreviations

- 3GPP: 3^{rd} Generation Partnership Project
- 4G / 5G / 6G 4^{th} / 5^{th} / 6^{th}: Generation
- CN: Core Network
- CORESET: Control Resource Set
- CSI-RS: Channel State Information Reference Signal
- DCI: Downlink Control Indicator
- DL: Downlink
- DRX: Discontinuous Reception
- eMTC: enhanced Machine Type Communication
- EPI: Early Paging Indication
- FR: Frequency Range
- gNB: Next Generation NodeB
- loT: Internet of Things
- LTE: Long-Term Evolution
- MDT: Minimization of Drive Tests
- MIB: Master Information Block
- NB: NarrowBand
- NR: New Radio (= 5G RAN)
- PDCCH: Physical Downlink Control Channel
- PEI: Paging Early Indication
- PO: Paging Occasion
- PRB: Physical Resource Block
- PSS: Primary Synchronization Signal
- QCL: Quasi Colocation
- RACH: Random Access Channel
- RAN: Radio Access Network
- RNTI: Radio Network Temporary Identifier
- RRC: Radio Resource Control
- RS: Reference Signal
- SFN: System Frame Number
- SI: System Information
- SIB: System Information Block
- SINR: Signal to Interference + Noise Ratio
- SSB: Synchronization Signal Block
- SSS: Secondary Synchronization Signal
- TRP: Transmission Point
- TRS: Tracking Reference Signal
- TS: Technical Specification
- UE: User Equipment
- UTC: Coordinated Universal Time
- WI: Work Item
- WID: Work Item Description
- WUS: Wake-up Signal

### Background

In 3GPP New Radio release 17 there is a work item on UE power saving (RP-193239). One of the objectives is as follows:
Specify enhancements for idle/inactive-mode UE power saving, considering system performance aspects
a) Study and specify paging enhancement(s) to reduce unnecessary UE paging receptions, subject to no impact to legacy UEs
b) Specify means to provide potential TRS/CSI-RS occasion(s) available in connected mode to idle/inactive-mode UEs, minimizing system overhead impact.

The paging early indication (PEI), also referred to as early paging indication (EPI), is an indication sent to a UE prior to the UE's paging occasion (PO). The indication informs the UE whether or not it will be paged in the PO. According to UE vendors, a UE typically receives 1-3 SSB bursts prior to monitoring the PO to obtain time-frequency synchronization. Therefore, there is potential energy saving if the UE in advance knows whether or not it will be paged and, thus, can skip the SSB burst monitoring.

The synchronization signal block (SSB) is continuously broadcasted by each cell. In NR, each SSB occupies 240 subcarriers (frequency domain) and 4 symbols (time-domain). It contains primary and secondary synchronization signals (PSS and SSS) and the physical broadcast channel (PBCH). The PSS and SSS represent the physical cell identity (PCI), and the PBCH carries the master information block (MIB) plus a few additional payload bits.

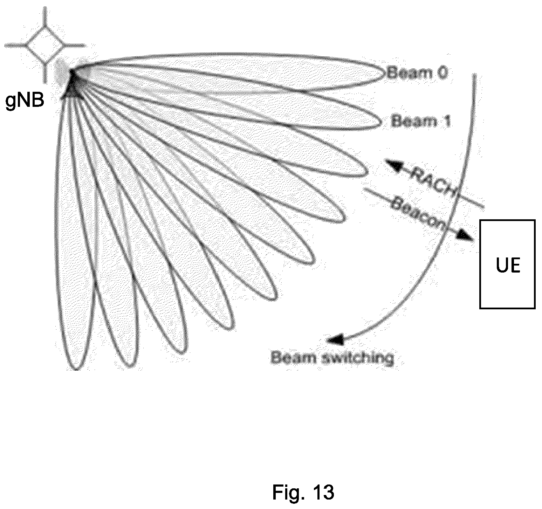

In NR, beams may be used in FR1 as well as in FR2 deployments. In the context of this application, the term "beam" is used to refer to a spatial direction to which a signal or signals are transmitted. A beam can be also understood as a certain spatial filter applied to the transmitted or received signal. If two signals share a beam they are assumed to be sent to a same spatial direction and/or have a same spatial filter applied and/or share a same spatial quasi co-location assumption. Two antenna ports are said to be quasi co-located if properties of the channel over which a symbol on one antenna port is conveyed can be inferred from the channel over which a symbol on the other antenna port is conveyed. Such properties may include Doppler shift, Doppler spread, average delay, delay spread, and spatial receiver parameters such as dominant angle of arrival at the UE and average angle of arrival at the UE. An example of a gNB transmitting beams is shown in Fig. 13.

According to 3GPP TS 38.304:
*In multi-beam operations, the UE assumes that the* same *paging message and the* same *Short Message are repeated in all transmitted beams and thus the selection of the beam(s) for the reception of the paging message and Short Message is up to UE implementation. The paging message is same for both RAN initiated paging and CN initiated paging.*

In NR, the UE is provided with a paging configuration that provides for the UE "monitoring occasions", i.e. the occasions for monitoring if a paging message (paging signal) for the UE is available. The occasions are indicated in time and frequency. In addition, the configuration determines which of the monitoring occasions are associated to each SS/PBCH block in terms of spatial quasi-co-location assumption. The network can decide whether it sends the paging message on all cells of the tracking area or on a subset thereof, and likewise also whether it sends it on all beams. As stated above, the network just needs to ensure that the transmitted paging message is the same.

Therefore, the same type of "signaling freedom" exists for the PEI. However, from a network perspective it is worth noting that the signaling overhead increases with the number of beams, which carry both PEI, paging DCI, and paging message. This is especially critical for FR2 deployments using up to 64 beams. DCI is used to transport downlink control information for one or more cells with one RNTI, in particular to convey grants.

Depending on what type of PEI design 3GPP selects for the PEI information, defining the configuration of PEI will vary. If the PEI is based on a SSS signaling it can e.g. include number of symbols and PRBs and the relative frequency position, while a DCI-based PEI would also include information on aggregation level and the applied RNTI. No matter what, the PEI information should be made available to the UE if PEI is used. According to current understanding in 3GPP, the use of PEI may be optional, both from UE's and network's perspective.

Currently, the network may choose to send a paging message on a subset of cells/beams if the delay budget of the paging allows. If the UE does not respond, the network can escalate to utilize more cells/beams in subsequent paging occasions.

Use of PEI can lead to 30-35 % energy saving for low SINR UE (using 3 SSB bursts to obtain time-frequency synchronization prior to PO) and 15-20 % for high SINR UE (using 1 SSB burst prior to PO) - see R1-2101664. Hence, it is advantageous for UEs to use PEI. The actual energy savings depend on the PEI type and paging rate, too.

The LTE-based loT technologies NB-loT and eMTC support a wake-up signal, which may have similarities to PEI, causing the UE to monitor the PO. In release 15 there was a single WUS per cell, while release 16 introduced the group WUS, where UEs are divided into multiple groups. The configuration of the sequence-based WUS is typically provided in system information. However, NB-loT and eMTC deployments do not utilize beams.

Further cited prior art documents are US 2020/288399 A1 showing a wake-up signal operation for multiple transmission and reception points, US 2019/387572 A1 showing a beamformed transmission of a C-DRX wakeup signal and HUAWEI ET AL: "Assistance RS occasions for IDLE/inactive mode", 3GPP DRAFT; R-2100217, 19 January 2021.

### Summary

### It is an object of the present invention to improve the prior art.

According to aspects of the invention, there are provided apparatuses and methods, as defined by the respective claims.

According to some example embodiments of the invention, at least one of the following advantages may be achieved:
- UE may save energy;
- Signaling may be reduced;
- Coordination effort between beams may be reduced.

It is to be understood that any of the above modifications can be applied singly or in combination to the respective aspects to which they refer, unless they are explicitly stated as excluding alternatives.

### Brief description of the drawings

Further details, features, objects, and advantages are apparent from the following detailed description of the preferred example embodiments of the present invention which is to be taken in conjunction with the appended drawings, wherein:
Fig. 1 shows a message chart according to option 1 of an example useful for understanding the invention;
Fig. 2 shows a message chart according to option 2 of an example embodiment of the invention;
Fig. 3 shows a message chart according to option 3 of an example useful for understanding the invention;
Fig. 4 shows an apparatus according to an example useful for understanding the invention;
Fig. 5 shows a method according to an example useful for understanding the invention;
Fig. 6 shows an apparatus according to an example useful for understanding the invention;
Fig. 7 shows a method according to an example useful for understanding the invention;
Fig. 8 shows an apparatus according to an example useful for understanding the invention;
Fig. 9 shows a method according to an example useful for understanding the invention;
Fig. 10 shows an apparatus according to an example useful for understanding the invention;
Fig. 11 shows a method according to an example useful for understanding the invention;
Fig. 12 shows an apparatus according to an example useful for understanding the invention; and
Fig. 13 shows a gNB transmitting beams.

### Detailed description of certain examples and example embodiments

Herein below, certain examples useful for understanding the invention and example embodiments of the present invention are described in detail with reference to the accompanying drawings, wherein the features of the example embodiments can be freely combined with each other unless otherwise described. However, it is to be expressly understood that the description of certain example embodiments is given by way of example only, and that it is by no way intended to be understood as limiting the invention to the disclosed details.

Moreover, it is to be understood that the apparatus is configured to perform the corresponding method, although in some cases only the apparatus or only the method are described.

Some example embodiments of the invention define how to configure and signal presence of PEI, in particular in multi-beam deployments. I.e., in some example embodiments, the gNB informs the UE on the beams over which gNB sends PEI. However, the examples are not limited to multi-beam deployments but may be applied in a "single-beam" deployment (i.e., a conventional cell without beams), too.

*PEI information* denotes the information that the network (gNB/cell) may provide to the UE in order to facilitate the UE's detection of PEI, comprising
- *PEI presence indication:* to indicate the presence of the PEI in one or more beams, (i.e. whether the TRP associated to a beam transmits PEI), and/or
- *PEI resource configuration* in a beam: to indicate time/frequency resources for PEI monitoring including transmission timing/periodicity and resource allocation of PEI.

The following options are proposed for the PEI information:
- **Option 1**: According to this option, PEI information is beam-specific and can be sent only via the beam(s) over which PEI is transmitted
   o In this option, PEI information may comprise only the PEI resource configuration, whereas PEI presence indication may be implicit based on the presence or absence of the PEI resource configuration in a beam. However, in some examples, gNB may additionally provide explicitly PEI presence indication.
   ∘ Based on the PEI resource configuration, UE selecting its serving beam can determine whether PEI is present in the selected beam and where PEI is located (if present);
   ∘ However, UE is unaware if PEI is transmitted via other beam(s) as well, and which ones. To determine that, the UE may monitor the other beam(s).
   ∘ To disable PEI transmission in a beam, the network can stop sending the beam-specific PEI information in that beam with no implications to other beams. This may reduce reconfiguration signaling overhead, especially in (FR2) scenarios with many beams.
   ∘ The signaling overhead in beams, which do not transmit PEI, may also be minimized, since the PEI information can be skipped in that beam altogether.
   ∘ Note that limiting the PEI information presence to the beams that transmit PEI may have an effect of complicating slightly blind combining of PEI transmitted over different beams, because the UE in advance should determine which beams transmit PEI.
      ▪ For example, for UE to enable PEI combining over its e.g. 2 strongest beams, the UE should determine upfront also whether PEI information is present (and thereby PEI is present) in its e.g. second strongest beam (in addition to determining if PEI information is present in its serving beam).
      ▪ If e.g. the 2nd strongest beam does not transmit PEI, the UE would have performed unnecessary reception operations, thus consuming power unnecessarily.

The UE may behave as follows:
- After detecting that PEI is present in the serving beam the UE may choose whether or not to utilize it, taking into account the serving beam SINR.
   o If serving beam SINR is low, the UE may choose to monitor if PEI is present on other beams as well, to potentially obtain combining gain
   ∘ If serving beam SINR is high, the UE may choose to not monitor if PEI is present on other beams. The UE may even choose not to monitor PEI on the serving beam
   ∘ In some examples, UE may always use PEI, irrespective of whether SINR is low.
- If the validity timer indicates the PEI on the serving beam is about to be disabled, the (low SINR) UE may start monitoring PEI on other beams, if available.

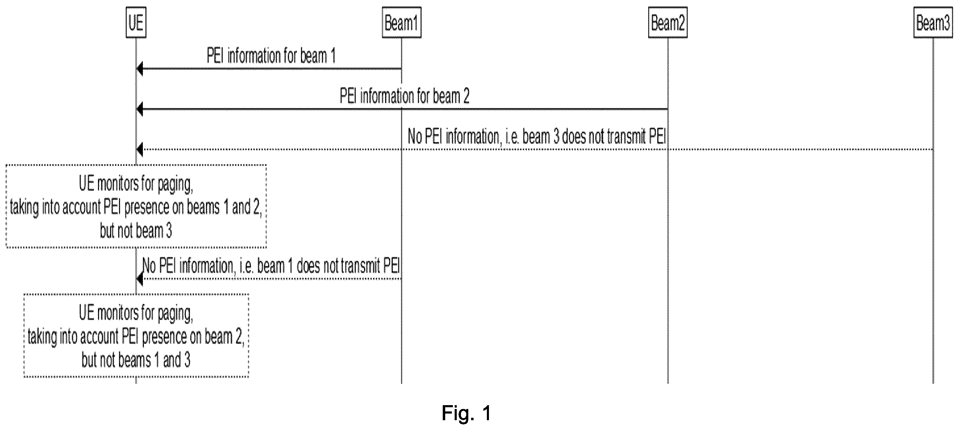

Fig. 1 shows a message chart according to option 1 according to an example useful for understanding the invention. In this example, beam 1 and beam 2 transmit PEI and, consequently for option 1, PEI information (indicated by solid arrows), while beam 3 transmits neither PEI nor PEI information (indicated by a dotted arrow). When the UE (in idle or inactive state) monitors for a paging signal over beams 1 and/or 2, it monitors first for PEI over the respective beam. After receipt of PEI over beam 1 or beam 2, it monitors for the actual paging signal over the corresponding beam. For beam 3, it may monitor only for the paging signal without monitoring for PEI over beam 3.

Some time later (e.g. after a validity period of the PEI information over beam 1, see below), UE recognizes that gNB does not transmit PEI anymore over beam 1 (indicated by a dotted arrow) either. Then, the UE monitors for PEI over beam 2 only before monitoring for the actual paging signal, while it may monitor for the actual paging signal without monitoring for PEI over beams 1 and 3.
- Option 2: In this option, PEI presence indication defining which beam(s) transmit PEI is sent over any transmitted beam. PEI resource configuration information, providing configuration related to PEI location (which may be beam-specific), is sent only via the beam(s) over which PEI is transmitted,
   ∘ UE selecting any beam can determine in which beams PEI is sent and in which beams PEI is not sent.
   ∘ In one example embodiment, the PEI presence indication is only sent on the beam(s) which transmit PEI, but on the contrary to option 1 the presence indication defines the PEI presence for any beam, which transmits PEI. A bitmap having size equal to the number of transmitted beams can be used for such indication, in which a bit flag indicates whether PEI is present or not present for each beam (value 1 and 0, respectively).
      ▪ As an example of counting the number or index for the transmitted beams, the actually transmitted SSBs can be used:
         - either the bitmap max size is determined based on the maximum number of SSB indexes in a cell and the bitmap size is equal to the max number of SSB time location indices. e.g. if 64 SSBs can be transmitted in a cell, the bitmap is 64 bit long and each bit indicates whether
            o in one further example, only the actually transmitted SSB time location indices are valid for PEI presence indication
         - UE forms a new bitmap based on the actually transmitted SSB time location indices or the bitmap contains only fields for the actually transmitted SSBs in a cell. E.g. if Lmax (max number of SSB indices in cell) is 'Lmax=8' and the actually transmitted SSBs ('1') are index_0 - index_7:
            ∘ [i0=1] [i1=0] [i2=1] [i3=0] [i4=1] [i5=0] [i6=0] [i7=1] the bitmap is the logical index order of the actually transmitted SSBs PEI_PRESENCE=[i_pei_0] [i_pei_2] [i_pei_4] [i_pei_7]
            o The bitmap fields are further assigned with value '1' or '0' depending on the presence of PEI for the given SSB.

The UE may behave as follows:
- The UE can obtain a bitmap indicating the presence indication per beam. This information can be used by UE to determine which beam(s) to select for PEI and paging monitoring with limited extra power expenditure.
- The UE may consider the SINR of neighbor beams based on SSB before obtaining the PEI resource configuration for those beams.
- If the validity timer indicates PEI on some beams are about to be disabled/enabled, the UE can act accordingly and disregard/obtain PEI resource configuration respectively.

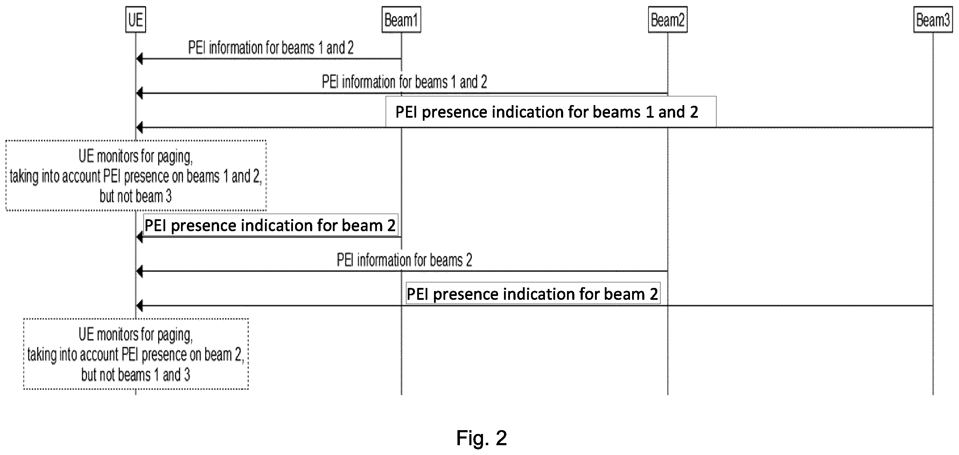

Fig. 2 shows a message chart according to option 2 according to an example embodiment of the invention. In this example, beam 1 and beam 2 transmit PEI and, consequently for option 2, PEI information (presence indication and PEI resource configuration), while beam 3 transmits neither PEI nor PEI resource configuration but PEI presence indication for beams 1 and 2. gNB transmits over both beams 1 and 2 PEI presence indication for beams 1 and 2. The PEI information may comprise PEI resource configuration for the respective other beam, too. When the UE (in idle or inactive state) monitors for a paging signal over beams 1 and/or 2, it monitors first for PEI. After receipt of PEI over beam 1 or beam 2, it monitors for the actual paging signal over the corresponding beam. For beam 3, it may monitor only for the paging signal without monitoring for PEI.

Some time later (e.g. after a validity period of the PEI information over beam 1, see below), gNB does not transmit PEI over beam 1 anymore. Then, PEI information over beams 1 and 2 is accordingly amended, and UE recognizes that gNB does not transmit PEI anymore over beam 1. After receipt of PEI over beam 2, UE monitors for the actual paging signal over beam 2, while it may monitor for the actual paging signal without monitoring for PEI over beams 1 and 3.
- **Option 3**: PEI information comprises the association to any beam in which PEI is transmitted
   o PEI information can be broadcasted via all beams (or all beams of a group of beams) transmitted in the cell
      ▪ UE selecting any beam will be able to determine if PEI is transmitted in the selected beam(s) and in which other beam(s) PEI is transmitted (and where PEI is located) based on the presence of PEI information in all beams.

This may simplify the use of blind PEI combining (which may be particularly useful at low SINR), but also may mean that the network may have to reconfigure the PEI information (broadcasted on all beams), when enabling/disabling PEI transmission in a beam.

Similar to option 2, the UE can obtain a bitmap indicating the presence indication per beam and utilize this to plan PEI and paging monitoring.

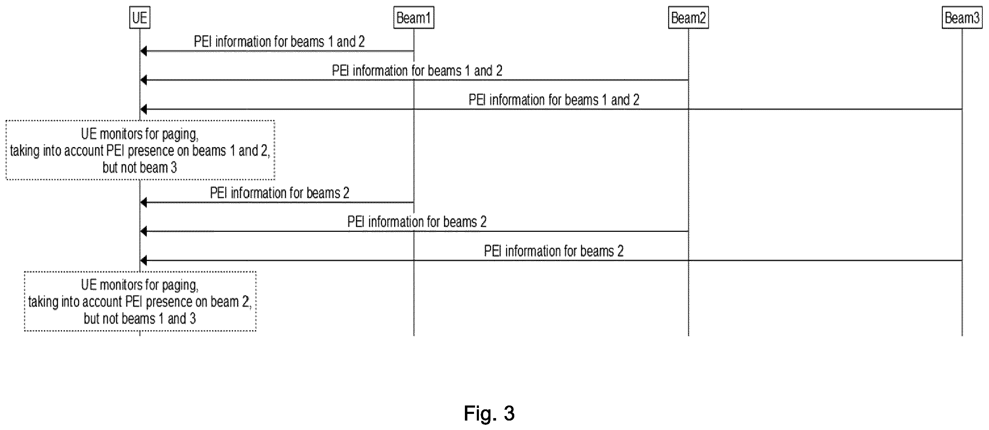

Fig. 3 shows a message chart according to option 3 according to an example useful for understanding the invention. In this example, beam 1 and beam 2 transmit PEI and, consequently for option 3, PEI information (presence indication and PEI resource configuration), while beam 3 does not transmit any PEI but PEI information for beams 1 and 2. gNB transmits over each of beams 1 to 3 PEI presence indication for beams 1 and 2. The PEI information may comprise PEI resource configuration for the respective other beam(s), too. When the UE (in idle or inactive state) monitors for a paging signal over beams 1 and/or 2, it monitors first for PEI. After receipt of PEI over beam 1 or beam 2, it monitors for the actual paging signal over the corresponding beam. For beam 3, it may monitor only for the paging signal without monitoring for PEI.

Some time later (e.g. after a validity period of the PEI information over beam 1, see below), gNB does not transmit PEI over beam 1 anymore. Then, PEI information over beams 1, 2, and 3 is accordingly amended, and UE recognizes that gNB does not transmit PEI anymore over beam 1. Then, after receipt of PEI over beam 2, it monitors for the actual paging signal over beam 2, while it may monitor for the actual paging signal without monitoring for PEI over beams 1 and 3.
- **Option 4:** The presence of PEI may be indicated in paging DCI:
   ∘ the presence of PEI associated with the received paging DCI message, may be indicated in paging DCI message. The paging DCI may have a field indicating whether a PEI is transmitted with association (e.g. QCL association with same SSB) on the same DL RS as the received DCI.
   o When receiving a DCI associated with a specific SSB indicating that a PEI is present, UE can switch the paging monitoring associated with the said SSB to PEI.
   ∘ UE may obtain the PEI configuration (e.g. the time/frequency/periodicity) e.g. via RRC signaling (i.e. signaling dedicated to the UE) or by broadcasted information such as a SIB or even MIB.
   ∘ If the paging DCI indicates that no PEI is present, UE may continue to monitor paging as configured by DCI.
   ∘ PEI indication in a DCI may include further information on the validity of the PEI presence, e.g. a counter or a timer
   ∘ In one example, the PEI presence indication may be beam specific or specific for a set of beams (a predetermined group)
   ∘ PEI presence indication may contribute potentially minor addition of information in paging DCI and other singling of presence indication may not be required. As a tradeoff, UE may obtain knowledge on the presence of PEI after first reception/decoding of a paging DCI.

The UE may behave as follows:
- After obtaining the paging DCI indication of whether PEI is present on one or more beams, the UE can plan PEI and paging monitoring, similar to option 2, also taking into account SINR.
- **Option 5**: The PEI presence is related to the presence/availability indication of the TRS occasions (see 3GPP objective b) in the background section) in cell/beams. Tracking reference signals (TRS) are sparse reference signals intended to assist the device in time and frequency tracking. A specific CSI-RS configuration serves the purpose of a TRS. For example:
   ∘ If the TRS occasions are indicated to be present in certain beams or sub-set of beams, UE may assume that the PEI is not sent for those beams
      ▪ As UE can use the TRS occasions to do the pre-synchronization for paging receipt, the power saving benefit due to PEI could be reduced.
      ▪ Optionally, if TRS occasions are not present in a cell, PEI may be sent on all beams
   ∘ Alternatively, if TRS occasions are indicated to be present in certain beams, UE can assume that the PEI will be present also in those beams or all/certain sub-set of beams
      ▪ From gNB perspective, activity for those beams is required anyway, thus from gNB perspective transmitting PEI may not significantly increase the activity
      ▪ Optionally, if TRS occasions are present in any beam or in a cell, PEI may be transmitted also in all beams of asub-set of beams.

The UE may behave as follows:
- Depending on the presence of PEI and/or TRS occasions the UE can plan PEI and paging monitoring, similar to option 2, also taking into account SINR.

In some implementations, a reverse logic may apply in the sense that presence/availability of the TRS occasions is conditioned on the PEI presence. In another alternative, a joint PEI and TRS/CSI-RS presence indication can be used via a bitmap indicating whether or not PEI and TRS/CSI-RS are present over a beam.

### Regarding provisioning of PEI information:

- The UE may obtain the resource allocation for the PEI information via System Information broadcasting. For example, a dedicated SIB may contain such configuration, and the network can then chose only to send the dedicated SIB on the beams, which carry the PEI.
- In some example embodiments, the network may provide the PEI information (resource configuration and/or presence indication) to UE via RRC signaling:
   o As part of an RRC message (such as the RRC Release, for example), the UE can be provisioned with the PEI information. Unless PEI information is also shared by other means, this may entail the network not being able to reconfigure PEI on the beams indicated to the UE via the RRC signaling while the UE is not in RRC connected state.
   o In one example, the RRC-based signaling may be used for stationary UEs to which the network may indicate only to expect PEI. In this case, gNB may provide PEI, for example,
      ▪ in their last serving beam if UE SINR is sufficiently high, or
      ▪ in their last serving beam and last 2nd strongest beam if UE SINR is not sufficiently high.
   ∘ UE may provide to the network an indication of stationary status when entering RRC connected state and/or prior to entering RRC Idle/Inactive state.
   ∘ in one example, UE may request PEI presence indication/resource configuration using RRC signaling and e.g. providing at least one of stationary status indication and one or more SSBs that are above a threshold (e.g. detection threshold)
      ▪ network may respond, using RRC message, the PEI presence indication/resource configuration
   ∘ A network internal SINR threshold can be used for the decision to indicate PEI over one beam or more than one beam.
   ∘ In one option the network can configure/UE may assume the presence of PEI on last serving beam associated with specific CORESET i.e. the beam/DL RS used as QCL source for receiving PDCCH DMRS for CORESET#0 or CORESET with lowest/highest index or any CORESET index indicated by network)
   ∘ In one example, the network may indicate to UE the set of SSBs where the PEI can be expected.

### Regarding the validity of the PEI indication

Optionally, the PEI indication may be valid for a certain validity period only. For example:
- if UE has been provided the PEI presence indication in dedicated signaling, UE can assume the presence of PEI on the indicated beams for N paging cycles/DRX cycles when in RRC Idle
- When the PEI presence indication is provided via System Information Broadcast the indication may also contain a validity timer, which indicate until which SFN/UTC time the indication is valid (per beam or per cell)
- The PEI presence indication may also indicate the PEI availability per paging cycle, e.g. if the presence indication is not available, the PEI will not be used in the current cycle.

When UE re-selects to a new cell it cannot anymore assume the PEI indication and resource configuration of the former cell to be valid.

Table 1 provides an overview of how the PEI presence indication and PEI resource configuration may be mapped to beams that transmit/do not transmit PEI for the proposed options, according to the examples of Options 1 to 3. Options 4 and 5 are not listed here because they rely on paging DCI and TRS presence, respectively.

**Table 1: Mapping between PEI information and beams for options 1 to 3.**

| | Option 1 | Option 2 | Option 3 |
|---|---|---|---|
| Beam transmits PEI | Presence + configuration | Presence + configuration | Presence + configuration |
| Beam does not transmit PEI | | Presence | Presence + configuration |

The decision whether or not the gNB provides PEI may be implementation specific. In the following, some options for deciding if and how to configure PEI are described.
- If the beam illuminates an area in an outer tier of a cell (i.e. not cell center), the served UEs are likely to have medium to low SINR. According to simulation results in R1-2101664 such a UE has a clear energy saving benefit of utilizing PEI as part of the paging monitoring. In this case, gNB may decide to transmit PEI.
   o Alternatively, the network may have observed, through measurement reports delivered while a UE was RRC connected, that the UE has low/medium SINR and thus will benefit of PEI.
- If the network observes that a UE is stationary (e.g. based on observations during last x seconds of connected time, or no tracking area update for y minutes, mobility history reporting, MDT reporting, etc) the network can choose to initially only send PEI and paging DCI in the UE's "current beam".
- If a beam is experiencing low load (e.g. PDCCH load including load due for the DCI-based PEI) the network can afford to spend resources on PEI. Likewise, the network may choose to deconfigure PEI in case of high load on a beam.
- If UEs are configured to monitor PO if they do not detect PEI (option currently discussed in 3GPP RAN1), the network can choose not to send PEI if a certain (high) number of UEs are to be paged. This saves network signaling, but will cause a few UEs to monitor PO without being paged.

In one example embodiment, the presence of PEI may be indicated in paging DCI. The paging DCI may have a field indicating whether a PEI is transmitted on this beam (associated with SSB). When receiving a DCI associated with a specific SSB indicating that a PEI is present UE can switch the paging monitoring associated with the said SSB to PEI.
- in one example, UE may monitor the normal paging DCI until it receives it and can determine whether the PEI is present for the given beam.
- In another example, the PEI indication may indicate to UE that PEI can be assumed to be present at least for next N paging cycles where N is configurable.
- In one further example, the paging DCI may further include a bit field (comprising one or more bits) carrying a counter value that gives the number of cycles how long the PEI can be assumed to be present:
   ∘ 4 bits in the paging DCI, can indicate up to a 16 cycle values ( e.g. next 15 cycles, down to 0 cycles, i.e. that PEI will not be present after reception of the DCI indicating the value)

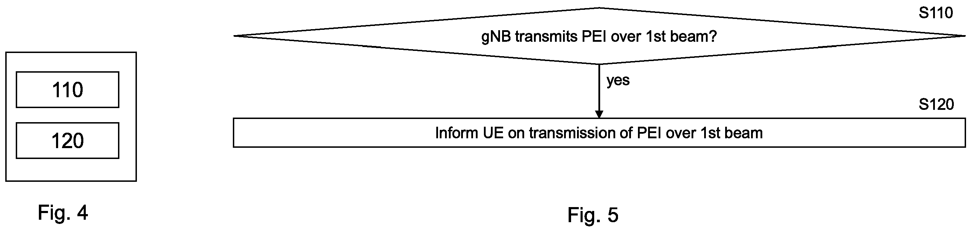

Fig. 4 shows an apparatus according to an example useful for understanding the invention. The apparatus may be a cell (represented by a base station such as a gNB or eNB), or an element thereof. Fig. 5 shows a method according to an example useful for understanding the invention. The apparatus according to Fig. 4 may perform the method of Fig. 5 but is not limited to this method. The method of Fig. 5 may be performed by the apparatus of Fig. 4 but is not limited to being performed by this apparatus.

The apparatus comprises means for checking 110 and means for causing 120. The means for checking 110 and means for causing 120 may be a checking means and causing means, respectively. The means for checking 110 and means for causing 120 may be a checker and causer, respectively. The means for checking 110 and means for causing 120 may be a checking processor and causing processor, respectively.

The means for checking 110 checks if a base station is configured to transmit a PEI to a terminal over a first beam (S110). If the base station is configured to transmit the PEI over the first beam (S110 = yes), the means for causing 120 causes the base station to inform the terminal that the base station is configured to transmit the PEI over the first beam (S120). For example, the base station may inform the terminal by a corresponding presence indication and/or by informing the UE on a configuration of the PEI. The latter alone may serve as an implicit indication on the presence of the PEI.

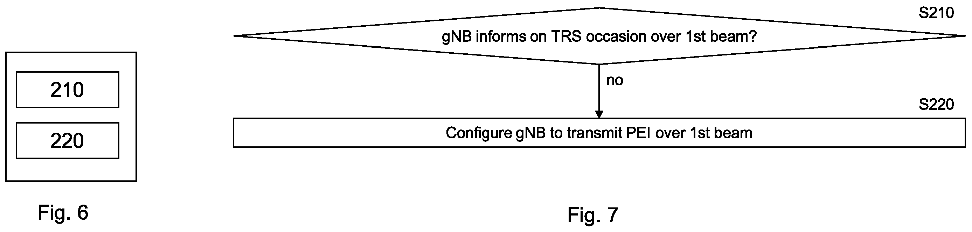

Fig. 6 shows an apparatus according to an example useful for understanding the invention. The apparatus may be a cell (represented by a base station such as a gNB or eNB), or an element thereof. Fig. 7 shows a method according to an example useful for understanding the invention. The apparatus according to Fig. 6 may perform the method of Fig. 7 but is not limited to this method. The method of Fig. 7 may be performed by the apparatus of Fig. 6 but is not limited to being performed by this apparatus.

The apparatus comprises means for checking 210 and means for configuring 220. The means for checking 210 and means for configuring 220 may be a checking means and configuring means, respectively. The means for checking 210 and means for configuring 220 may be a checker and configurator, respectively. The means for checking 210 and means for configuring 220 may be a checking processor and configuring processor, respectively.

The means for checking 210 checks if a base station is configured to inform a terminal on a TRS occasion presence over a first beam (S210). If the base station is not configured to inform the terminal on the TRS occasion presence over the first beam (S210 = no), the means for configuring 220 configures the base station to transmit a PEI over the first beam (S220).

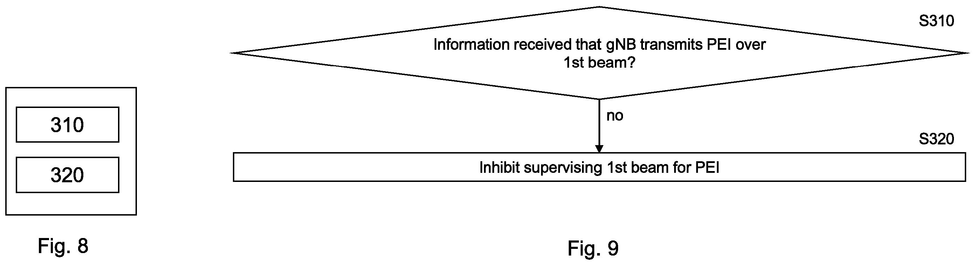

Fig. 8 shows an apparatus according to an example useful for understanding the invention. The apparatus may be a terminal such as a UE, or an element thereof. Fig. 9 shows a method according to an example useful for understanding the invention. The apparatus according to Fig. 8 may perform the method of Fig. 9 but is not limited to this method. The method of Fig. 9 may be performed by the apparatus of Fig. 8 but is not limited to being performed by this apparatus.

The apparatus comprises means for checking 310 and means for inhibiting 320. The means for checking 310 and means for inhibiting 320 may be a checking means and inhibiting means, respectively. The means for checking 310 and means for inhibiting 320 may be a checker and inhibitor, respectively. The means for checking 310 and means for inhibiting 320 may be a checking processor and inhibiting processor, respectively.

The means for checking 310 checks if a terminal receives an information from a base station that the base station is configured to transmit a PEI over a first beam (S310). For example, the information may be a corresponding presence indication and/or an information on a configuration of the PEI. The latter alone may serve as an implicit indication on the presence of the PEI.

If the terminal does not receive the information that the base station is configured to transmit the PEI over the first beam (S310 = no), the means for inhibiting 320 inhibits the terminal to supervise whether the terminal receives the PEI over the first beam (S320). In addition, in some examples, if the terminal receives the information that the base station is configured to transmit the PEI over the first beam (S310 = yes), the apparatus may instruct the terminal to supervise whether the terminal receives the PEI over the first beam.

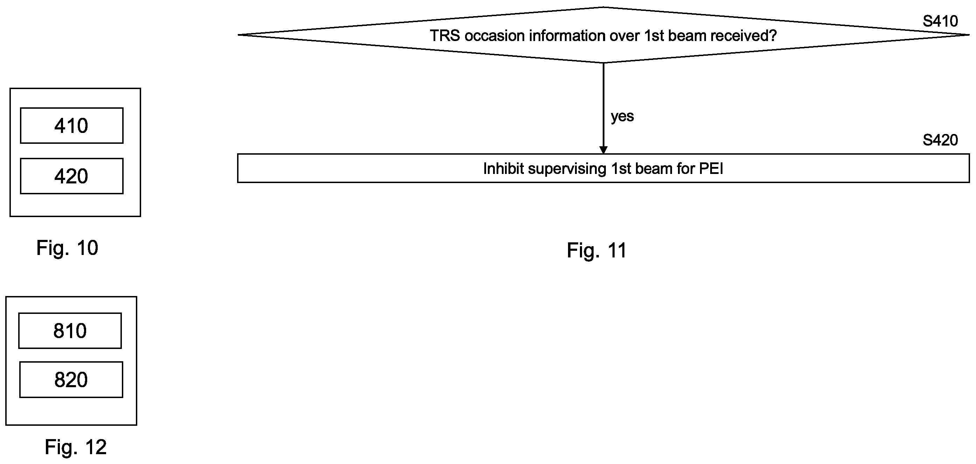

Fig. 10 shows an apparatus according to an example useful for understanding the invention. The apparatus may be a terminal such as a UE, or an element thereof. Fig. 11 shows a method according to an example useful for understanding the invention. The apparatus according to Fig. 10 may perform the method of Fig. 11 but is not limited to this method. The method of Fig. 11 may be performed by the apparatus of Fig. 10 but is not limited to being performed by this apparatus.

The apparatus comprises means for checking 410 and means for inhibiting 420. The means for checking 410 and means for inhibiting 420 may be a checking means and inhibiting means, respectively. The means for checking 410 and means for inhibiting 420 may be a checker and inhibitor, respectively. The means for checking 410 and means for inhibiting 420 may be a checking processor and inhibiting processor, respectively.

The means for checking 410 checks if the terminal receives a TRS occasion information over the first beam (S410). The TRS occasion information indicates that the base station is configured to indicate a TRS occasion over the first beam.

If the terminal receives the TRS occasion information over the first beam (S410 = yes), the means for inhibiting 420 inhibits the terminal to supervise whether the terminal receives the PEI over the first beam (S420). In addition, in some examples, if the terminal does not receive the TRS occasion information over the first beam (S410 = no), the apparatus may instruct the terminal to supervise whether the terminal receives the PEI over the first beam.

Fig. 12 shows an apparatus according to an example useful for understanding the invention. The apparatus comprises at least one processor 810, at least one memory 820 including computer program code, and the at least one processor 810, with the at least one memory 820 and the computer program code, being arranged to cause the apparatus to at least perform at least one of the methods according to Figs. 5, 7, 9, and 11 and related description.

Some example embodiments are explained with respect to a 5G network (NR). However, the invention is not limited to 5G. It may be used in other networks, too, e.g. in former or forthcoming generations of 3GPP networks such as 4G, 6G, 7G, etc.

One piece of information may be transmitted in one or plural messages from one entity to another entity. Each of these messages may comprise further (different) pieces of information.

Names of network elements, network functions, protocols, and methods are based on current standards. In other versions or other technologies, the names of these network elements and/or network functions and/or protocols and/or methods may be different, as long as they provide a corresponding functionality.

If not otherwise stated or otherwise made clear from the context, the statement that two entities are different means that they perform different functions. It does not necessarily mean that they are based on different hardware. That is, each of the entities described in the present description may be based on a different hardware, or some or all of the entities may be based on the same hardware. It does not necessarily mean that they are based on different software. That is, each of the entities described in the present description may be based on different software, or some or all of the entities may be based on the same software. Each of the entities described in the present description may be deployed in the cloud.

According to the above description, it should thus be apparent that example embodiments of the present invention provide, for example, a terminal, such as a UE, or a component thereof, an apparatus embodying the same, a method for controlling and/or operating the same, and computer program(s) controlling and/or operating the same as well as mediums carrying such computer program(s) and forming computer program product(s). According to the above description, it should thus be apparent that example embodiments of the present invention provide, for example, a cell, represented by a base station (e.g. gNB, eNB), or a component thereof, an apparatus embodying the same, a method for controlling and/or operating the same, and computer program(s) controlling and/or operating the same as well as mediums carrying such computer program(s) and forming computer program product(s).

Implementations of any of the above described blocks, apparatuses, systems, techniques or methods include, as non-limiting examples, implementations as hardware, software, firmware, special purpose circuits or logic, general purpose hardware or controller or other computing devices, or some combination thereof. Each of the entities described in the present description may be embodied in the cloud.

It is to be understood that what is described above is what is presently considered the preferred embodiments of the present invention. However, it should be noted that the description of the preferred embodiments is given by way of example only and that various modifications may be made without departing from the scope of the invention as defined by the appended claims.

## Claims

1. A base station, comprising:
one or more processors, and
memory storing instructions that, when executed by the one or more processors, cause the base station to perform:
checking, for each beam of a plurality of beams, if the base station is configured to transmit a respective paging early indication over the respective beam;
generating a combined presence indication based on a result of the checking, wherein the combined presence indication indicates for each beam of the plurality of beams whether the base station is configured to transmit a respective paging early indication over the respective beam;
providing the combined presence indication to a terminal in idle or inactive state over each beam of the plurality of beams; and
for each beam of the plurality of beams, if the base station is configured to transmit the respective paging early indication over the respective beam: informing the terminal, over the respective beam, on a resource configuration of the respective paging early indication on the respective beam;
for each beam of the plurality of beams, if the base station is not configured to transmit a paging early indication over the respective beam: inhibiting informing the terminal on any resource configuration of the paging early indications the base station is configured to transmit.

2. The apparatus according to claim 1, wherein the resource configuration indicates at least one the following: time or frequency resource allocation for the respective paging early indication.

3. The base station according to any of claims 1 to 2, wherein the resource configuration is beam specific.

4. The base station according to any of claims 1 to 3, wherein the combined presence indication comprises a bitmap having size equal to the number of the plurality of beams, wherein a bit flag in the bitmap indicates whether the base station is configured to transmit a paging early indication over the respective beam.

5. The base station according to claim 4, wherein each beam is associated to an index corresponding to a synchronization signal block index in a cell, wherein the size of the bitmap corresponds to the maximum number of SSBs that can be transmitted in the cell.

6. The base station according to claim 4. wherein each beam is associated to an index corresponding to a synchronization signal block index in a cell, wherein the size of the bitmap corresponds to the number of SSBs that are transmitted in the cell.

7. The base station according to any of claims 1 to 5, wherein the instructions, when executed by the one or more processors, cause the base station to perform: providing a validity period for one or more of the paging early indications, the validity period indicating how long the respective beam will comprise the respective paging early indication.

8. The base station according to any of claims 1 to 7, wherein the instructions, when executed by the one or more processors, further cause the base station to perform:
for each beam of the plurality of beams, if the base station is configured to transmit the respective paging early indication over the respective beam: informing the terminal, over the respective beam, on the resource configuration of the paging early indications the base station is configured to transmit.

9. The base station according to any of claims 1 to 8, wherein the base station is caused to provide the combined presence indication to the terminal in at least one of a downlink control indicator and a radio resource control message.

10. A terminal, comprising:
one or more processors, and
memory storing instructions that, when executed by the one or more processors, cause the terminal to perform:
receiving, at the terminal in idle or inactive state from a base station, over a first beam, a combined presence indication indicating that the base station is configured to transmit a second paging early indication over a second beam different from the first beam and is not configured to transmit a first paging early indication over the first beam;
inhibiting the terminal to supervise whether the terminal receives the first paging early indication over the first beam;
receiving, from the base station over the second beam, information on a resource configuration of the second paging early indication on the second beam; and
checking whether the terminal receives, over the second beam based on the resource configuration, the second paging early indication.

11. The terminal of claim 10, wherein the resource configuration indicates at least one the following: time or frequency resource allocation for the respective paging early indication.

12. The terminal according to any of claims 10 to 11, wherein the combined presence indication indicates for each beam of a plurality of beams including the first beam and the second beam whether the base station is configured to transmit a respective paging early indication over the respective beam.

13. The terminal according to claim 12, wherein the combined presence indication comprises a bitmap having size equal to the number of the plurality of beams, wherein a bit flag in the bitmap indicates whether the base station is configured to transmit a paging early indication over the respective beam.

14. Method performed by a base station, comprising:
checking, for each beam of a plurality of beams, if the base station is configured to transmit a respective paging early indication over the respective beam;
generating a combined presence indication based on a result of the checking, wherein the combined presence indication indicates for each of the beams whether the base station is configured to transmit the respective paging early indication over the respective beam;
providing the combined presence indication to the terminal in idle or inactive state over each beam of the plurality of beams; and
for each beam of the plurality of beams, if the base station is configured to transmit the respective paging early indication over the respective beam: informing the terminal, over the respective beam, on a resource configuration of the respective paging early indication on the respective beam;
for each beam of the plurality of beams, if the base station is not configured to transmit the respective paging early indication over the respective beam: inhibiting informing the terminal on any resource configuration of the paging early indications the base station is configured to transmit.

15. Method performed by a terminal, comprising:
receiving, at the terminal in idle or inactive state from a base station, over a first beam, a combined presence indication indicating that the base station is configured to transmit a second paging early indication over a second beam different from the first beam and is not configured to transmit a first paging early indication over the first beam;
inhibiting the terminal to supervise whether the terminal receives the first paging early indication over the first beam;
receiving, from the base station over the second beam, information on a resource configuration of the second paging early indication;
checking whether the terminal receives, over the second beam based on the resource configuration, the second paging early indication.

## Patentansprüche

1. Basisstation, die Folgendes umfasst:
einen oder mehrere Prozessoren, und
einen Speicher, in dem Anweisungen gespeichert sind, die, wenn sie von dem einen oder den mehreren Prozessoren ausgeführt werden, die Basisstation veranlassen, Folgendes durchzuführen::
Prüfen für jeden Strahl einer Vielzahl von Strahlen, ob die Basisstation dazu ausgelegt ist, eine jeweilige Pagingfrühanzeige über den jeweiligen Strahl zu übertragen;
Erzeugen einer kombinierten Anwesenheitsanzeige auf Basis eines Ergebnisses des Prüfens, wobei die kombinierte Anwesenheitsanzeige für jeden Strahl der Vielzahl von Strahlen anzeigt, ob die Basisstation dazu ausgelegt ist, eine jeweilige Pagingfrühanzeige über den jeweiligen Strahl zu übertragen;
Bereitstellen der kombinierten Anwesenheitsanzeige für ein Endgerät in einem Ruhe- oder Inaktivitätszustand über jeden Strahl der Vielzahl von Strahlen; und
für jeden Strahl der Vielzahl von Strahlen, wenn die Basisstation dazu ausgelegt ist, die jeweilige Pagingfrühanzeige über den jeweiligen Strahl zu übertragen: Informieren des Endgeräts über den jeweiligen Strahl über eine Ressourcenauslegung der jeweiligen Pagingfrühanzeige auf dem jeweiligen Strahl;
für jeden Strahl der Vielzahl von Strahlen, wenn die Basisstation nicht dazu ausgelegt ist, eine Pagingfrühanzeige über den jeweiligen Strahl zu übertragen: Unterbinden des Informierens des Endgeräts über eine Ressourcenauslegung der Pagingfrühanzeigen, zu deren Übertragung die Basisstation ausgelegt ist.

2. Basisstation nach Anspruch 1, wobei die Ressourcenauslegung mindestens eines von Folgendem anzeigt: Zeit- oder Frequenzressourcenzuteilung für die jeweilige Pagingfrühanzeige.

3. Basisstation nach einem der Ansprüche 1 bis 2, wobei die Ressourcenauslegung strahlspezifisch ist.

4. Basisstation nach einem der Ansprüche 1 bis 3, wobei die kombinierte Anwesenheitsanzeige eine Bitmap umfasst, die eine Größe aufweist, die mit der Anzahl der Vielzahl von Strahlen gleich ist, wobei ein Bitmarker in der Bitmap anzeigt, ob die Basisstation dazu ausgelegt ist, eine Pagingfrühanzeige über den jeweiligen Strahl zu übertragen.

5. Basisstation nach Anspruch 4, wobei jeder Strahl mit einem Index verknüpft ist, der einem Synchronisationssignalblockindex in einer Zelle entspricht, wobei die Größe der Bitmap der maximalen Anzahl von SSBs entspricht, die in der Zelle übertragen werden können.

6. Basisstation nach Anspruch 4, wobei jeder Strahl mit einem Index verknüpft ist, der einem Synchronisationssignalblockindex in einer Zelle entspricht, wobei die Größe der Bitmap der Anzahl von SSBs entspricht, die in der Zelle übertragen werden.

7. Basisstation nach einem der Ansprüche 1 bis 5, wobei die Anweisungen, wenn sie von dem einen oder den mehreren Prozessoren ausgeführt werden, die Basisstation zu Folgendem veranlassen: Bereitstellen einer Gültigkeitsperiode für eine oder mehrere der Pagingfrühanzeigen, wobei die Gültigkeitsperiode anzeigt, wie lange der jeweilige Strahl die jeweilige Pagingfrühanzeige umfassen wird.

8. Basisstation nach einem der Ansprüche 1 bis 7, wobei die Anweisungen, wenn sie von dem einen oder den mehreren Prozessoren ausgeführt werden, die Basisstation ferner veranlassen, Folgendes durchzuführen:
für jeden Strahl der Vielzahl von Strahlen, wenn die Basisstation dazu ausgelegt ist, die jeweilige Pagingfrühanzeige über den jeweiligen Strahl zu übertragen: Informieren des Endgeräts über den jeweiligen Strahl über die Ressourcenauslegung der Pagingfrühanzeigen, zu deren Übertragung die Basisstation ausgelegt ist.

9. Basisstation nach einem der Ansprüche 1 bis 8, wobei die Basisstation veranlasst wird, dem Endgerät die kombinierte Anwesenheitsanzeige in mindestens einem von einer Downlinksteuerindikator- und einer Funkressourcensteuernachricht bereitzustellen.

10. Endgerät, das Folgendes umfasst:
einen oder mehrere Prozessoren, und
einen Speicher, in dem Anweisungen gespeichert sind, die, wenn sie von dem einen oder den mehreren Prozessoren ausgeführt werden, das Endgerät veranlassen, Folgendes durchzuführen::
Empfangen einer kombinierten Anwesenheitsanzeige, die anzeigt, dass die Basisstation dazu ausgelegt ist, eine zweite Pagingfrühanzeige über einen zweiten Strahl zu übertragen, der sich vom ersten Strahl unterscheidet, und nicht dazu ausgelegt ist, eine erste Pagingfrühanzeige über einen ersten Strahl zu übertragen, am Endgerät in einem Ruhe- oder Inaktivitätszustand von einer Basisstation über den ersten Strahl;
Unterbinden des Überwachens durch das Endgerät, ob das Endgerät eine erste Pagingfrühanzeige über den ersten Strahl empfängt;
Empfangen von Informationen über eine Ressourcenauslegung der zweiten Pagingfrühanzeige auf dem zweiten Strahl von der Basisstation über den zweiten Strahl; und
Prüfen, ob das Endgerät die zweite Pagingfrühanzeige über den zweiten Strahl auf Basis der Ressourcenauslegung empfängt.

11. Endgerät von Anspruch 10, wobei die Ressourcenauslegung mindestens eines von Folgendem anzeigt: Zeit- oder Frequenzressourcenzuteilung für die jeweilige Pagingfrühanzeige.

12. Endgerät nach einem der Ansprüche 10 bis 11, wobei die kombinierte Anwesenheitsanzeige für jeden Strahl einer Vielzahl von Strahlen, die den ersten Strahl und den zweiten Strahl beinhaltet, anzeigt, ob die Basisstation dazu ausgelegt ist, eine jeweilige Pagingfrühanzeige über den jeweiligen Strahl zu übertragen.

13. Endgerät nach Anspruch 12, wobei die kombinierte Anwesenheitsanzeige eine Bitmap umfasst, die eine Größe aufweist, die mit der Anzahl der Vielzahl von Strahlen gleich ist, wobei ein Bitmarker in der Bitmap anzeigt, ob die Basisstation dazu ausgelegt ist, eine Pagingfrühanzeige über den jeweiligen Strahl zu übertragen.

14. Verfahren, das von einer Basisstation durchgeführt wird und Folgendes umfasst:
Prüfen für jeden Strahl einer Vielzahl von Strahlen, ob die Basisstation dazu ausgelegt ist, eine jeweilige Pagingfrühanzeige über den jeweiligen Strahl zu übertragen;
Erzeugen einer kombinierten Anwesenheitsanzeige auf Basis eines Ergebnisses des Prüfens, wobei die kombinierte Anwesenheitsanzeige für jeden Strahl der Strahlen anzeigt, ob die Basisstation dazu ausgelegt ist, die jeweilige Pagingfrühanzeige über den jeweiligen Strahl zu übertragen;
Bereitstellen der kombinierten Anwesenheitsanzeige für das Endgerät in einem Ruhe- oder Inaktivitätszustand über den Strahl der Vielzahl von Strahlen; und
für jeden Strahl der Vielzahl von Strahlen, wenn die Basisstation dazu ausgelegt ist, die jeweilige Pagingfrühanzeige über den jeweiligen Strahl zu übertragen: Informieren des Endgeräts über den jeweiligen Strahl über eine Ressourcenauslegung der jeweiligen Pagingfrühanzeige auf dem jeweiligen Strahl;
für jeden Strahl der Vielzahl von Strahlen, wenn die Basisstation nicht dazu ausgelegt ist, die jeweilige Pagingfrühanzeige über den jeweiligen Strahl zu übertragen: Unterbinden des Informierens des Endgeräts über eine Ressourcenauslegung der Pagingfrühanzeigen, zu deren Übertragung die Basisstation ausgelegt ist.

15. Verfahren, das von einem Endgerät durchgeführt wird und Folgendes umfasst:
Empfangen einer kombinierten Anwesenheitsanzeige, die anzeigt, dass die Basisstation dazu ausgelegt ist, eine zweite Pagingfrühanzeige über einen zweiten Strahl zu übertragen, der sich vom ersten Strahl unterscheidet, und nicht dazu ausgelegt ist, eine Pagingfrühanzeige über einen ersten Strahl zu übertragen, am Endgerät in einem Ruhe- oder Inaktivitätszustand von einer Basisstation über den ersten Strahl;
Unterbinden des Überwachens durch das Endgerät, ob das Endgerät eine erste Pagingfrühanzeige über den ersten Strahl empfängt;
Empfangen von Informationen über eine Ressourcenauslegung der zweiten Pagingfrühanzeige von der Basisstation über den zweiten Strahl;
Prüfen, ob das Endgerät die zweite Pagingfrühanzeige über den zweiten Strahl auf Basis der Ressourcenauslegung empfängt.

## Revendications

1. Station de base comprenant :
un ou plusieurs processeurs, et
une mémoire stockant des instructions qui, lorsqu'elles sont exécutées par les un ou plusieurs processeurs, amènent la station de base à effectuer les opérations suivantes :
pour chaque faisceau d'une pluralité de faisceaux, vérifier si la station de base est configurée pour transmettre une indication précoce de radiomessagerie respective sur le faisceau respectif ;
générer une indication de présence combinée sur la base d'un résultat de la vérification, dans laquelle l'indication de présence combinée indique pour chaque faisceau de la pluralité de faisceaux si la station de base est configurée pour transmettre une indication précoce de radiomessagerie respective sur le faisceau respectif ;
fournir l'indication de présence combinée à un terminal en état de repos ou inactif sur chaque faisceau de la pluralité de faisceaux ; et
pour chaque faisceau de la pluralité de faisceaux, si la station de base est configurée pour transmettre l'indication précoce de radiomessagerie respective sur le faisceau respectif : informer le terminal sur le faisceau respectif d'une configuration de ressource de l'indication précoce de radiomessagerie respective sur le faisceau respectif ;
pour chaque faisceau de la pluralité de faisceaux, si la station de base n'est pas configurée pour transmettre une indication précoce de radiomessagerie sur le faisceau respectif inhiber l'information du terminal de toute configuration de ressource des indications précoces de radiomessagerie que la station de base est configurée pour transmettre.

2. Station de base selon la revendication 1, dans laquelle la configuration de ressource indique au moins une parmi : une allocation de ressources de temps ou une allocation de ressources de fréquences pour l'indication précoce de radiomessagerie respective.

3. Station de base selon l'une des revendications 1 et 2, dans laquelle la configuration de ressource est spécifique au faisceau.

4. Station de base selon l'une des revendications 1 à 3, dans laquelle l'indication de présence combinée comprend une table de bits dont la taille est égale au nombre de la pluralité de faisceaux, dans laquelle un drapeau de bits dans la table de bits indique si la station de base est configurée pour transmettre une indication précoce de radiomessagerie sur le faisceau respectif.

5. Station de base selon la revendication 4, dans laquelle chaque faisceau est associé à un index correspondant à un index de bloc de signal de synchronisation dans une cellule, dans laquelle la taille de la table de bits correspond au nombre maximal de SSB [bloc de signal de synchronisation] qui peuvent être transmis dans la cellule.

6. Station de base selon la revendication 4, dans laquelle chaque faisceau est associé à un index correspondant à un index de bloc de signal de synchronisation dans une cellule, dans laquelle la taille de la table de bits correspond au nombre de SSB qui sont transmis dans la cellule.

7. Station de base selon l'une des revendications 1 à 5, dans laquelle les instructions, lorsqu'elles sont exécutées par les un ou plusieurs processeurs, amènent la station de base à effectuer l'opération suivante : fournir une période de validité pour une ou plusieurs des indications précoces de radiomessagerie, la période de validité indiquant pendant combien de temps le faisceau respectif comprendra l'indication précoce de radiomessagerie respective.

8. Station de base selon l'une des revendications 1 à 7, dans laquelle les instructions, lorsqu'elles sont exécutées par les un ou plusieurs processeurs, amènent en outre la station de base à effectuer l'opération suivante :
pour chaque faisceau de la pluralité de faisceaux, si la station de base est configurée pour transmettre l'indication précoce de radiomessagerie respective sur le faisceau respectif : informer le terminal sur le faisceau respectif de la configuration de ressource des indications précoces de radiomessagerie que la station de base est configurée pour transmettre.

9. Station de base selon l'une des revendications 1 à 8, dans laquelle la station de base est amenée à fournir l'indication de présence combinée au terminal dans au moins un parmi un indicateur de contrôle de liaison descendante et un message de contrôle de ressource radio.

10. Terminal comprenant :
un ou plusieurs processeurs, et
une mémoire stockant des instructions qui, lorsqu'elles sont exécutées par les un ou plusieurs processeurs, amènent le terminal à effectuer les opérations suivantes :
recevoir sur le terminal en état de repos ou inactif, en provenance d'une station de base, sur un premier faisceau, une indication de présence combinée selon laquelle la station de base est configurée pour transmettre une deuxième indication précoce de radiomessagerie sur un deuxième faisceau différent du premier faisceau, et n'est pas configurée pour transmettre une première indication précoce de radiomessagerie sur le premier faisceau ;
inhiber le terminal pour qu'il supervise la réception par le terminal de la première indication précoce de radiomessagerie sur le premier faisceau ;
recevoir de la station de base sur le deuxième faisceau, des informations d'une configuration de ressource de la deuxième indication précoce de radiomessagerie sur le deuxième faisceau ; et
vérifier si le terminal reçoit la deuxième indication précoce de radiomessagerie sur le deuxième faisceau sur la base de la configuration de ressource.

11. Terminal selon la revendication 10, dans lequel la configuration de ressource indique au moins une parmi : une allocation de ressources de temps ou une allocation de ressources de fréquences pour l'indication précoce de radiomessagerie respective.

12. Terminal selon l'une des revendications 10 et 11, dans lequel l'indication de présence combinée indique pour chaque faisceau d'une pluralité de faisceaux comportant le premier faisceau et le deuxième faisceau si la station de base est configurée pour transmettre une indication précoce de radiomessagerie respective sur le faisceau respectif.

13. Terminal selon la revendication 12, dans lequel l'indication de présence combinée comprend une table de bits dont la taille est égale au nombre de la pluralité de faisceaux, dans lequel un drapeau de bits dans la table de bits indique si la station de base est configurée pour transmettre une indication précoce de radiomessagerie sur le faisceau respectif.

14. Procédé réalisé par une station de base comprenant les étapes suivantes :
pour chaque faisceau d'une pluralité de faisceaux, vérifier si la station de base est configurée pour transmettre une indication précoce de radiomessagerie respective sur le faisceau respectif ;
générer une indication de présence combinée sur la base d'un résultat de la vérification, dans lequel l'indication de présence combinée indique pour chacun des faisceaux si la station de base est configurée pour transmettre l'indication précoce de radiomessagerie respective sur le faisceau respectif ;
fournir l'indication de présence combinée au terminal en état de repos ou inactif sur chaque faisceau de la pluralité de faisceaux ; et
pour chaque faisceau de la pluralité de faisceaux, si la station de base est configurée pour transmettre l'indication précoce de radiomessagerie respective sur le faisceau respectif : informer le terminal sur le faisceau respectif d'une configuration de ressource de l'indication précoce de radiomessagerie respective sur le faisceau respectif ;
pour chaque faisceau de la pluralité de faisceaux, si la station de base n'est pas configurée pour transmettre l'indication précoce de radiomessagerie respective sur le faisceau respectif : inhiber l'information du terminal de toute configuration de ressource des indications précoces de radiomessagerie que la station de base est configurée pour transmettre.

15. Procédé réalisé par un terminal comprenant les étapes suivantes :
recevoir sur le terminal en état de repos ou inactif, en provenance d'une station de base, sur un premier faisceau, une indication de présence combinée selon laquelle la station de base est configurée pour transmettre une deuxième indication précoce de radiomessagerie sur un deuxième faisceau différent du premier faisceau, et n'est pas configurée pour transmettre une première indication précoce de radiomessagerie sur le premier faisceau ;
inhiber le terminal pour qu'il supervise la réception par le terminal de la première indication précoce de radiomessagerie sur le premier faisceau ;
recevoir de la station de base sur le deuxième faisceau des informations d'une configuration de ressource de la deuxième indication précoce de radiomessagerie ;
vérifier si le terminal reçoit la deuxième indication précoce de radiomessagerie sur le deuxième faisceau sur la base de la configuration de ressource.
